**Europäisches Patentamt**

**European Patent Office**

**Office européen des brevets**

(19)

(11) Veröffentlichungsnummer : **0 141 092 B1**

# (12) EUROPÄISCHE PATENTSCHRIFT

(45) Veröffentlichungstag der Patentschrift :
30.09.87

(21) Anmeldenummer : 84109739.7

(22) Anmeldetag : 16.08.84

(51) Int. Cl.⁴ : **B 60 G  3/20**, B 60 G  7/00

(54) Unabhängige Radaufhängung für Kraftfahrzeuge.

(30) Priorität : 30.08.83 DE 3331247

(43) Veröffentlichungstag der Anmeldung :
15.05.85 Patentblatt 85/20

(45) Bekanntmachung des Hinweises auf die Patenterteilung : 30.09.87 Patentblatt 87/40

(84) Benannte Vertragsstaaten :
DE FR GB IT SE

(56) Entgegenhaltungen :
EP-A- 0 083 183
DE-A- 2 038 880
FR-A- 1 425 504
GB-A- 2 036 241
AUTOMOBILTECHNISCHE  ZEITSCHRIFT,  Nr.  11,
November 1963, Seiten 362-363, Stuttgart;

(73) Patentinhaber : **BAYERISCHE MOTOREN WERKE
Aktiengesellschaft
Postfach 40 02 40 Petuelring 130 - AJ-36
D-8000 München 40 (DE)**

(72) Erfinder : **Matschinsky, Wolfgang, Dipl.-Ing.
Korbinianplatz 9
D-8000 München 40 (DE)**

(74) Vertreter : **Dexheimer, Rolf
Bayerische Motoren Werke Aktiengesellschaft Postfach 40 02 40 Petuelring 130 - AJ-31
D-8000 München 40 (DE)**

EP 0 141 092 B1

Jouve, 18, rue St-Denis, 75001 Paris, France

## Beschreibung

Die Erfindung bezieht sich auf eine unabhängige Radaufhängung für Kraftfahrzeuge, insbesondere für angetriebene Hinterräder von Personenkraftwagen, mit einem das Rad lagernden Radträger, der mit dem Fahrzeugaufbau oder dergleichen über drei an diesem angelenkte Lenker verbunden ist, von denen einer ein im wesentlichen in Fahrzeuglängsrichtung verlaufender Längsarm und die beiden anderen am Radträger über Gelenke angreifende, im wesentlichen übereinander angeordnete sowie zumindest annähernd in Fahrzeugquerrichtung verlaufende Querlenker sind.

Derartige Radaufhängungen sind bekannt (vgl. beispielsweise FR-A 1 425 504) und auch in der Praxis gebaut worden (vgl. ATZ, 1963, Seiten 362 und 363). Achsen mit Radaufhängungen dieser Gattung, die häufig auch als 3-Lenker-Achsen bezeichnet werden, bieten, etwa bei Verwendung als Hinterachsen, den Vorteil, daß der Bauraum zwischen dem Längsarm und den beiden Querlenkern weitgehend freigehalten werden kann und für die Unterbringung des Kraftstofftanks, der Rücksitze und dgl. vergleichsweise mehr Platz zur Verfügung steht als bei anderen Achsbauarten, bei denen in diesem Bereich Anlenkpunkte für die Lenker liegen. Wegen der lediglich drei Anlenkpunkte je Rad am Fahrzeugaufbau bieten Achsen dieser Gattung auch noch den Vorteil einer verhältnismäßig einfachen Bauweise und einer leichteren Montage.

Die bekannten Radaufhängungen der vorausgesetzten Bauart haben aber noch den wesentlichen Nachteil, daß ein Anfahrnickausgleich bei einer Hinterachse nur möglich ist, wenn der fahrzeugaufbauseitige, in Fahrtrichtung vor dem Rad liegende Anlenkpunkt des Längsarms höher angeordnet ist als die Radmitte. Dies bedingt aber wiederum den Verzicht auf die an sich möglichen Vorteile im Hinblick auf die Einbaumöglichkeiten des Rücksitzes, ggf. auch des Kraftstofftanks, insbesondere bei viersitzigen Personenwagen. Ferner ist es bei den bekannten 3-Lenker-Achsen schwierig, einen Lenkwinkel des Rades in Richtung Nachspur beim Ein- und Ausfedern zu vermeiden, da die Querlenker den Radträger beim Ein-egen. Es ergäbe sich nur dann eine befriedigende Lösung, wenn die Querlenker möglichst lang ausgeführt und dennoch so gegeneinander geneigt würden, daß beim Ein- und Ausfedern eine beträchtliche Radsturzänderung auftritt. Die langen Querlenker würden wiederum erhebliche Raumprobleme aufwerfen und die starke Radsturzänderung würde die Reifenabnutzung beträchtlich erhöhen.

Der Erfindung liegt die Aufgabe zugrunde, eine unabhängige Radaufhängung der eingangs genannten Gattung zu schaffen, die unter Vermeidung der vorerwähnten Nachteile bzw. Kompromisse Verhältnismäßig einfach im Aufbau und in der Montage ist, die aber trotzdem einen wirksamen Anfahrnickausgleich ermöglicht, ohne daß das Längsarmlager höher als die Radmitte angeordnet werden muß.

Diese Aufgabe wird erfindungsgemäß bei einer Radaufhängung der vorausgesetzten Bauart dadurch gelöst, daß der Radträger an dem Längsarm schwenkbar angeordnet ist und daß einer der Querlenker zwischen seinem radträgerseitigen Gelenk und seinem aufbauseitigen Gelenk gelenkig mit einem Ende einer Stützstrebe Verbunden ist, die mit ihrem anderen Ende gelenkig an dem Längsarm angreift. Auf diese Weise ist es möglich, wie anhand mehrerer Ausführungsbeispiele weiter unten noch erläutert werden wird, dem Angriffspunkt des mit der Stützstrebe verbundenen Querlenkers beim Ein- und Ausfedern eine Bewegungsbahn und eine Geschwindigkeit aufzuzwingen, die in Verbindung mit der Bewegungsbahn und der Geschwindigkeit des Angriffspunkts des Längsarms am Radträger den Radträger (in Seitenansicht) um einen ideellen Drehpol schwenken läßt, der deutlich höher liegt, als der reale Anlenkpunkt des Längsarmes am Fahrzeugaufbau oder dergleichen. Dadurch, daß der Längsarm relativ zum Radträger schwenkbar ist, ist es möglich, beispielsweise durch Schrägstellen dieser Schwenkachse gegenüber der Fahrzeugquerrichtung (in Draufsicht) dem ein- oder ausfedernden Rad auch eine geringe Lenkkomponente in Richtung Vorspur zu verleihen, die die an sich bauartbedingte geringe Lenkbewegung in Nachspur kompensiert bzw. überkompensiert.

Bei den bevorzugten und in der Zeichnung dargestellten Ausführungsformen ist jeweils der obere Querlenker mit der Stützstrebe verbunden, wobei diese Stützstrebe andererseits mit einem am unteren Bereich des Radträgers angreifenden Längsarm verbunden ist, der vom Radträger in Fahrtrichtung nach vorne gerichtet ist.

Weitere besonders vorteilhafte Ausgestaltungen der Erfindung, die auch Gegenstand von Unteransprüchen sind, sind im folgenden anhand mehrerer in der Zeichnung dargestellter Ausführungsbeispiele näher erläutert. Es zeigen :

Figur 1 eine Ansicht von hinten eines ersten Ausführungsbeispiels der neuen Radaufhängung ;

Figur 2 eine Seitenansicht der Aufhängung nach Fig. 1 ;

Figur 3 eine Draufsicht der Aufhängung nach Fig. 1 ;

Figur 4 eine perspektivische Prinzipdarstellung der Aufhängung nach den Fig. 1-3;

Figur 5 eine Draufsicht auf den Längsarm der neuen Radaufhängung, teilweise im Schnitt ;

Figur 6 eine etwa der Fig. 2 entsprechende Prinzipsskizze mit Geschwindigkeitsplänen ;

Figuren 7 und 8 zwei schematische Prizipdarstellungen von weiteren Ausführungsbeispielen ;

Figur 9 eine Längsansicht zum Ausführungsbeispiel nach Fig. 7 ;

Figur 10 eine der Fig. 6 entsprechende Darstellung zum Ausführungsbeispiel nach Fig. 7 ;

Figuren 11, 12 und 13 Seitenansicht, Längsansicht und Draufsicht eines weiteren Ausführungsbeispiels;

Figuren 14, 15 und 16 schematische Prinzipdarstellungen weiterer Ausführungsbeispiele der Erfindung.

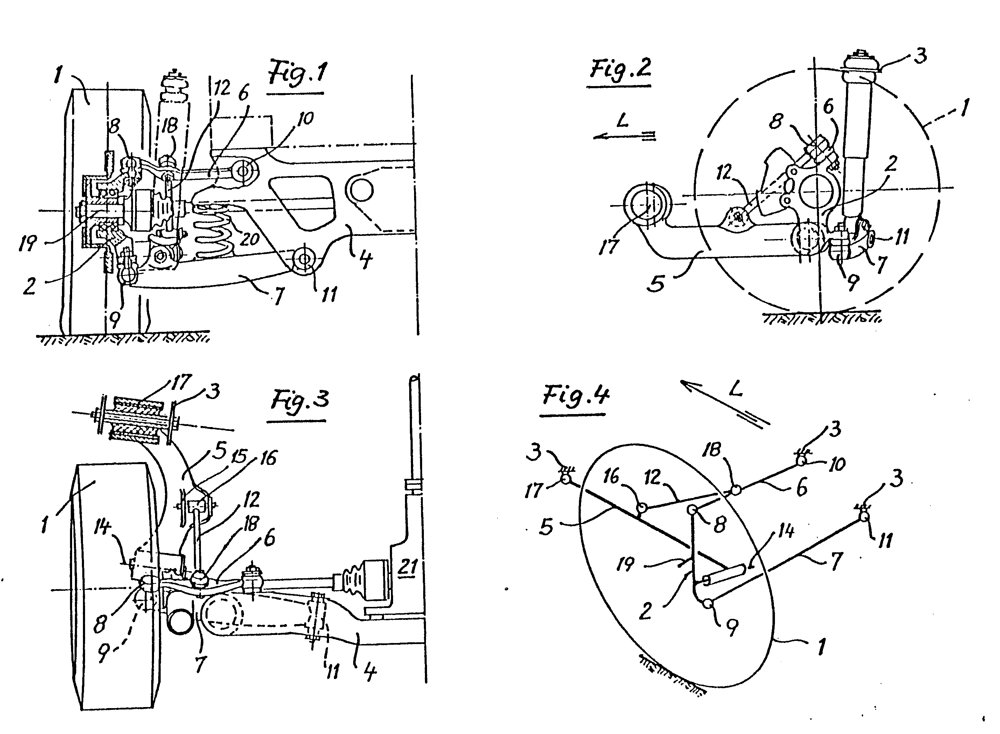

Die in den Fig. 1-4 ersichtliche unabhängige Radaufhängung dient für das linke hintere angetriebene Rad 1 eines Kraftfahrzeugs. Es ist gelagert auf einem Radträger 2, der mit dem lediglich angedeuteten Fahrzeugaufbau 3 bzw. mit einem mit dem Fahrzeugaufbau 3 zu verschraubenden Hilfsträger 4 über drei Lenker verbunden ist. Die drei Lenker sind aufbauseitig über kardanische Bewegungen zulassende Gelenke, vorzugsweise über Gummigelenke, angelenkt. Die drei Lenker bestehen aus einem Längsarm 5, der im wesentlichen in Fahrzeuglängsrichtung L verläuft, sowie aus einem oberen Querlenker 6 und einem unteren Querlenker 7. Der obere Querlenker 6 greift im oberen Bereich über ein Kugelgelenk 8 und der untere Querlenker 7 im unteren Bereich über ein Kugelgelenk 9 am Radträger 2 an. An dem bereits erwähnten Hilfsträger 4 ist der obere Querlenker 6 mit einem Gummigelenk 10 und der untere Querlenker 7 über ein Gummigelenk 11 angelenkt. Die beiden im wesentlichen in Fahrzeugquerrichtung verlaufenden Querlenker 6, 7 könnten (ohne Hilfsträger 4) auch direkt am Fahrzeugaufbau 3 angelenkt sein.

Der Radträger 2 ist an dem Längsarm 5 schwenkbar angeordnet, was für sich bekannt ist (beispielsweise aus Rennsportfahrzeugen oder auch aus der DE-A 20 38 880). Der obere Querlenker 6 ist zwischen seinem radträgerseitigen Gelenk 8 und seinem aufbauseitigen Gelenk 10 gelenkig mit einem Ende einer Stützstrebe 12 verbunden, die mit ihrem anderen Ende gelenkig an dem Längsarm 5 angreift. Der Längsarm 5 ist im unteren Bereich des Radträgers 2 schwenkbar an diesem gelagert und erstreckt sich von diesem in Fahrtrichtung nach vorne.

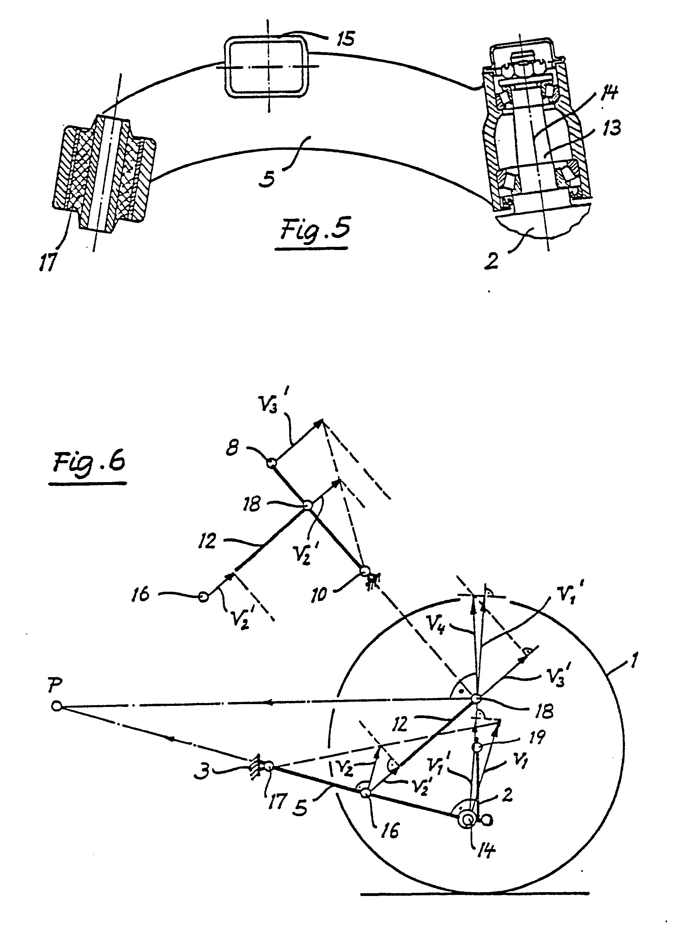

Eine Möglichkeit, wie der Längsarm 5 ecksteif aber schwenkbar an dem Radträger 2 gelagert werden kann, zeigt Fig. 5. Ein nach innen gerichteter Lagerzapfen 13 des Radträgers 2 dient als Lagersitz für zwei Kegelrollenlager, die andererseits den Längsarm 5 abstützen. Im Abstand von der Lagerachse 14 trägt der Längsarm 5 einen Lagerbock 15 zur Aufnahme des Gelenks 16, über das die Stützstrebe 12 mit dem Längsarm 5 in Verbindung steht. Das vordere Ende des Längsarms 5 umschließt ein Gummilager 17, das mit seinem rohrförmigen Innenteil mit dem Fahrzeugaufbau 3 oder dergleichen fest verbunden ist.

Bei den Ausführungsformen nach den Fig. 1-4 erstreckt sich die Stützstrebe 12 von dem oberen Querlenker 6 zum Längsarm 5 schräg nach vorne unten. Für diese Ausführungsform soll nun nachstehend anhand der Fig. 6 die Wirkung der erfindungsgemäßen Maßnahmen näher erläutert werden.

In Fig. 6 ist zur Vereinfachung angenommen daß die Querlenker exakt horizontal verlaufen, was an sich nicht unbedingt erforderlich wäre.

Die Einfederungsgeschwindigkeit $v_1$ des radträgerseitigen Lagers (entspricht weitgehend der Schwenkachse 14) des Längsarms 5 hat eine Geschwindigkeit $v_2$ des Gelenks 16 der schrägen Stützstrebe 12 zur Folge und $v_2$ hat die Komponente $v_2'$ in Richtung der Stützstrebe 12, die auch die entsprechende Komponente der Geschwindigkeit des Stützstrebenanlenkpunktes 18 am oberen Querlenker 6 ist. Diese Geschwindigkeitskomponente $v_2'$ ist in dem in Fig. 6 links oben dargestellten Schrägriß als Bewegungskomponente des Anlenkpunktes 18 in Richtung der Stützstrebe 12 ebenfalls dargestellt. Wegen des Abstandes des Anlenkpunktes 18 vom radträgerseitigen Gelenk 8 des oberen Querlenkers 6 tritt am radträgerseitigen Gelenk 8 eine gleichgerichtete, durch das erwähnte Abstandsverhältnis jedoch vergrößerte Geschwindigkeitskomponente $v_3'$ auf.

In der (in Fig. 6 unten dargestellten) Seitenansicht müssen andererseits die Komponenten von $v_1$ und der Geschwindigkeit des äußeren Kugelgelenks 8 des oberen Querlenkers 6 in Richtung der Verbindungslinie beider Lager bzw. Gelenke gleich groß sein ($v_1' = v_1'$). Die Geschwindigkeit $v_4$ des oberen Kugelgelenks 8 und deren Richtung ergibt sich im Schnittpunkt der Lote auf $v_1'$ und $v_3'$. Der Pol P der Radaufhängung liegt in der Seitenansicht im Schnittpunkt des Lotes auf $v_4$ und der Verlängerung des Längsarms 5. Wie man erkennt, liegt der Pol P deutlich höher als die Radmitte, die in Fig. 6 durch die Radachse 19 angedeutet ist, obwohl das vordere Lager 17 des Längsarms 5 tiefer als die Radmitte liegt. Es läßt sich also mit einer erfindungsgemäßen Radaufhängung ein sehr guter Anfahrnickausgleich und ebenfalls ein guter Bremsnickausgleich erreichen, bei gleichzeitig günstigen Einbauverhältnissen der Radaufhängung. Die kinematische Auslegung der Querlenker 6, 7 kann trotzdem frei von Einschränkungen hinsichtlich Sturzänderung und Vorspuränderung allein nach gewünschten Kriterien, wie beispielsweise Rollzentrumshöhe, ausgelegt werden.

Eine elastische (geringfügige) Lenkwirkung beim Bremsen oder Beschleunigen läßt sich in an sich bekannter Weise durch Verwendung eines fahrgestellseitigen elastischen Lagers 17 des Längsarms 5 steuern, das in verschiedenen Richtungen unterschiedliche Federraten aufweist, indem man die räumliche Anordnung dieser Richtungen entsprechend wählt.

Wie man in der Zeichnung erkennt, kann der untere Querlenker 7 am Radträger 2 hinter der Radmitte angelenkt werden, um bei Seitenkraft ein untersteuerndes elastisches Eigenlenkverhalten zu erzeugen. Der untere Querlenker 7 dient vorzugsweise zur Aufnahme der Feder 20, um die Bauhöhe der Radaufhängung klein zu halten. Beide Querlenker 6, 7 und auch die Feder 20 können an dem querlaufenden Hilfsträger 4 vormontiert werden, der auch das Hinterachsgetriebe 21 abstützt und seinerseits starr mit dem übrigen Fahrzeugaufbau verschraubt wird.

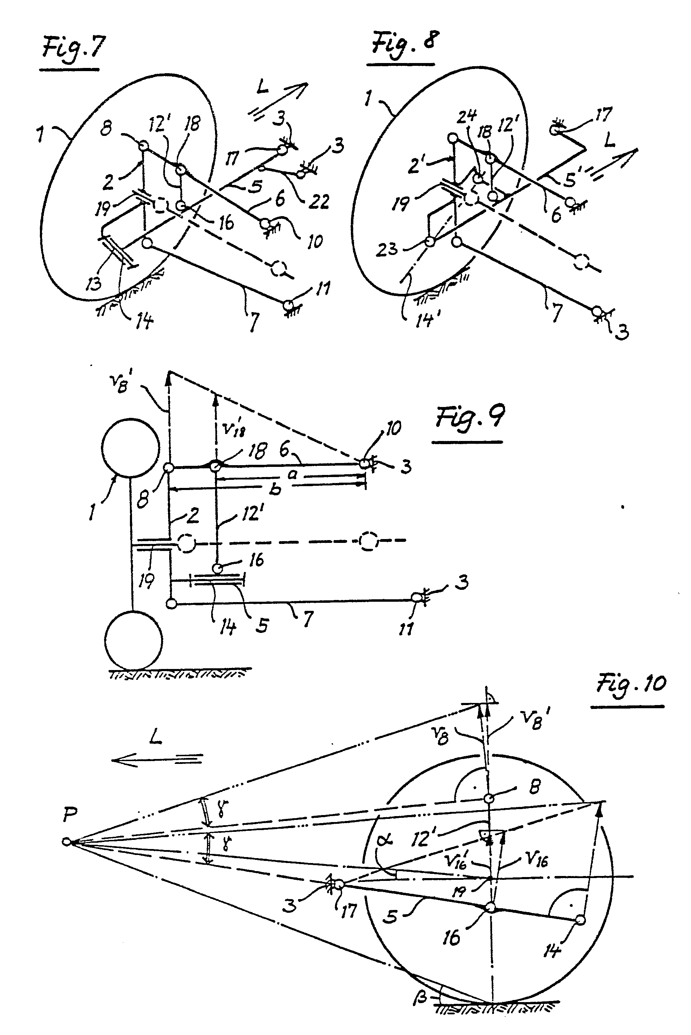

Kleine Vorspuränderungen unter dem Einfluß von Brems- oder Antriebskräften, aber auch unter dem Einfluß der Ein- oder Ausfederungsbewegung, lassen sich in der gewünschten Richtung bei entsprechenden Elastizitäten des vorderen Lagers 17 des Längsarms 5 auch durch einen in Fig. 7 dargestellten Zusatzlenker 22 erreichen, der einerseits am Längsarm 5, andererseits am Fahrzeugaufbau 3 gelenkig angreift und zumindest annähernd quer zur Fahrzeuglängsrichtung verläuft.

Bei elastischer Längsbewegung der Radaufhängung (hervorgerufen durch Längsstöße) macht bei dem Ausführungsbeispiel nach den Fig. 1-6 der obere Anlenkpunkt 18 am Radträger 2 wegen der « Übersetzung » des Weges der Stützstrebe 12 (vgl. Fig. 6 : Verhältnis $v_2'$ zu $v_3'$) einen größeren horizontalen Weg als das Lager 14 des Längsarms 5 am Radträger 2. Deshalb ergibt sich bei derartigen elastischen Längsbewegungen der Radaufhängung für den Radträger 2 ein Drehpol unterhalb der Aufstandsfläche des Rades 1 in endlichem Abstand. Das Abrollen des Rades 1 ergibt dann wegen der gleichzeitigen Schwenkbewegung des Radträgers 2 um den genannten Pol eine geringere Relativdrehzahl, was die Beeinflussung der Meßgenauigkeit eines ABS-Sensors in günstiger Weise vermindert.

Bei den Ausführungsbeispielen nach den Fig. 7-14 verläuft die Stützstrebe 12' annähernd vertikal. Auf diese Weise wird vermieden, daß über die Stützstrebe auf den oberen Querlenker 6 Horizontalkraft — im besonderen Längskraftkomponenten übertragen werden. Die Auslegung der Elastokinematik der Radaufhängung vereinfacht sich dadurch. Das vordere Lager 17 des Längsarms 5 bzw. 5' überträgt dann die Längskräfte im wesentlichen allein und kann dann in der schon weiter oben angedeuteten Art besonders gut hinsichtlich Vorspuränderung und dgl. ausgelegt werden.

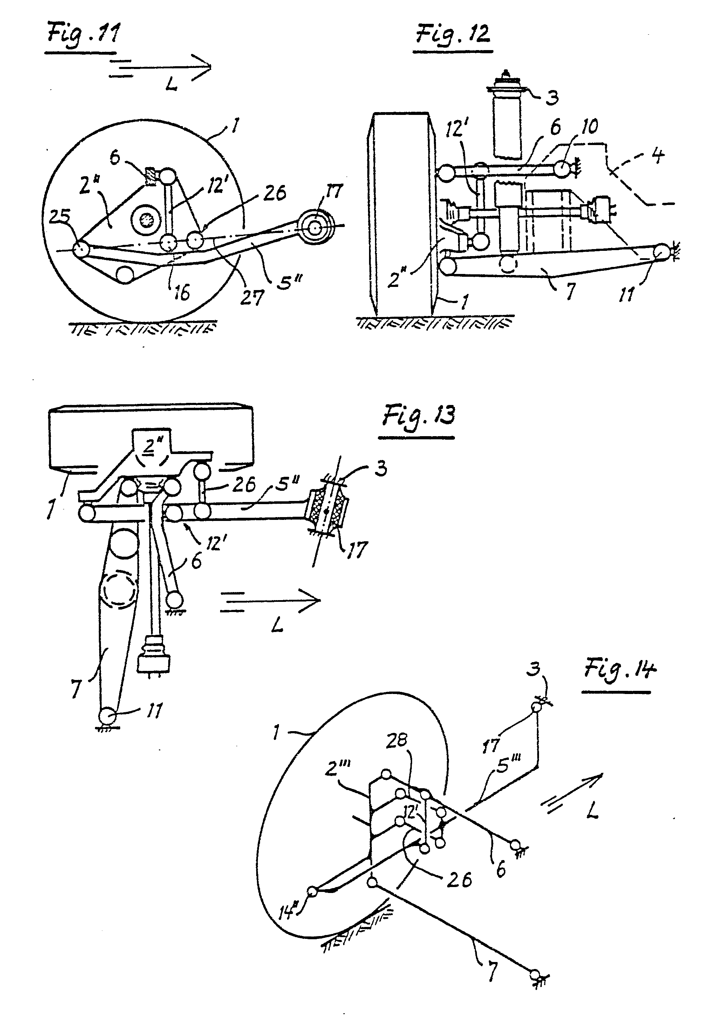

Wie man in den Fig. 7 und 8 erkennt, kann die Schwenkachse 14 bzw. 14', um die der Radträger 2 bzw. 2' gegenüber dem Längsarm 5 bzw. 5' schwenkbar ist, zur Radachse 19 geneigt sein. Die Schwenkachse 14, 14' verläuft dabei vorzugsweise — in Draufsicht — von in Fahrtrichtung hinten innen nach vorne außen. Dadurch läßt sich eine günstige Vorspurkurve über dem Ein- und Ausfederweg erreichen. Bei der Darstellung nach der Fig. 7 ist dabei, ebenso wie bei den Ausführungsformen nach den Fig. 1-4 die Schwenkachse 14 durch ein reines Drehgelenk· gebildet, beispielsweise mit einem Lagerzapfen 13, der zwei Wälzlager trägt (siehe auch Fig. 5).

Gemäß Fig. 8 kann die Schwenkachse 14' auch durch zwei im Abstand voneinander angeordnete Kugelgelenke 23, 24 gebildet sein, die eine Schwenkachse 14' definieren, um die der Radträger 2' gegenüber dem Längsarm 5' schwenkbar ist. Angelehnt an die Darstellung nach Fig. 7 sei mit Hilfe der Fig. 9 und 10 ebenfalls erläutert, wie auch mit der vertikalen Stützstrebe 12' das der Erfindung zugrunde liegende Prinzip verwirklicht werden kann, mit dem bei relativ tief liegendem vorderen Lagerpunkt 17 des Längsarms 5 trotzdem in Seitenansicht ein hoher Gelenkpol der Radaufhängung erreichbar ist, der einen guten Anfahrnickausgleich und Bremsnickausgleich gewährleistet.

Das Gelenk 16, über das die Stützstrebe 12' an dem Längsarm 5 angreift, bewege sich beim Einfedern mit der Geschwindigkeit $V_{16}$. Die Vertikalkomponente in Richtung der vertikalen Strebe 12' ist $v_{16}'$ (Fig. 10). Der obere Anlenkpunkt 18 der vertikalen Strebe 12' hat die vertikale Geschwindigkeit $v_{18}'$ (= $v_{16}'$), die für den oberen äußeren Gelenkpunkt 8 des oberen Querlenkers 6 gemäß Fig. 9 die vertikale Geschwindigkeitskomponente $v_8'$ ergibt.

Bei gewünschtem Pol P, um den sich der Radträger 2 drehen soll, hat der obere Anlenkpunkt 8 die Geschwindigkeit $v_8$. Diese Geschwindigkeit hat auch eine vertikale Geschwindigkeitskomponente $v_8'$ in Richtung der vertikalen Stützstrebe 12'. Durch richtiges Abstimmen der Hebelarmverhältnisse a/b wird die nach Fig. 10 ermittelte Geschwindigkeit $v_8'$ der entsprechenden Geschwindigkeit $v_8'$ in Fig. 9 gleichgesetzt. Der Pol P kann auf diese Weise ebenfalls deutlich über der Radachse 19 gewählt werden, obwohl das (reale) Lager 17 des Längsarms 5 nicht über der Radachse 19 liegt.

Für den Einbau der rückwärtigen Sitze, auch eines Kraftstofftanks, der vor der Radachse liegt, ergeben sich wiederum die schon weiter oben geschilderten Vorteile. Der Bremsabstützwinkel ist in Fig. 10 mit β bezeichnet, während der Anfahrabstützwinkel mit α bezeichnet ist.

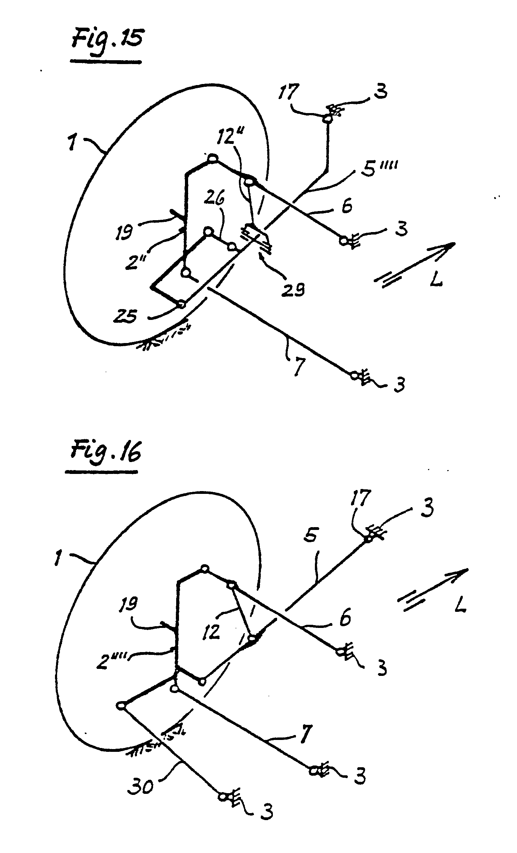

Auch bei dem Ausführungsbeispiel nach den Fig. 11-13 sind nur drei aufbauseitige Anlenkpunkte vorhanden bei gleichzeitig gutem Raumangebot zwischen diesen Anlenkpunkten (Fig. 13). Die Schwenkachse zwischen dem Radträger 2'' und dem Längsarm 5'' wird dabei durch eine kugelige Anlenkung 25 (des Schwenkarms am Radträger) und eine an Radträger 2'' und Längsarm 5'' jeweils gelenkig angreifende Querstrebe 26 gebildet. Die Querstrebe 26 verhindert dabei, daß beispielsweise bei einer räumlichen Anordnung der Schwenkachse, wie sie durch die Schwenkachse 14' in Fig. 8 veranschaulicht ist, eine Drehbewegung des Längsarms 5'' um seine Längsachse erfolgt. Die Gelenkverbindungen an den beiden Enden der Querstrebe 26 werden zweckmäßig durch Kugelgelenke gebildet. Damit bei der in Fig. 11-13 gezeigten Ausführungsform der neuen Radaufhängung die gesamten Gelenkverbindungen sich kinematisch richtig bewegen, liegen die Gelenkpunkte der Verbindungen Längsarm 5''/Radträger 2'' (Anlenkung 25), Längsarm 5''/Stützstrebe 12' (Gelenk 16), Längsarm 5''/Querstrebe 26 (deren inneres Gelenk) und Längsarm 5''/Fahrzeugaufbau 3 (Lager 17) auf einer Geraden 27 (Fig. 11). Die obige Forderung, nach der die beschriebenen Gelenke auf der Geraden 27 liegen müssen, kann entfallen, wenn gemäß Fig. 14 in vertikalem Abstand zu der ersten Querstrebe 26 eine zweite, ebenfalls gelenkig am Radträger 2''' und am Längsarm 5'''angreifende weitere Querstrebe 28 vorgesehen ist. Dies bedeutet zwar einen größeren Bauaufwand, gibt aber für die konstruktive Auslegung des Längsarmes 5‴ wieder größere Freiheiten, so daß beispielsweise das vordere Lager 17 wieder mehr oder ganz vor die Radmitte gelegt werden kann, was für eine günstige Aufnahme von Längskräften vorteilhaft ist. Anstelle der soeben beschriebenen weiteren Querstrebe 28 des Ausführungsbeispiels nach Fig. 14 kann mit den gleichen Vorteilen einer günstigen Krafteinleitung in das vordere Lager 17 des Längsarms 5‴ auch eine Stützstrebe 12″ vorgesehen werden, die mit dem Längsarm 5‴ durch ein ecksteifes Drehgelenk 29 verbunden ist, dessen Drehachse im wesentlichen in Fahrzeugquerrichtung verläuft (Fig. 15).

Schließlich kann aber auch die mehrfach erwähnte Querstrebe 26 entfallen, wenn, wie aus Fig. 16 ersichtlich ist, an dem Radträger 3‴ eine Spurstange 30 gelenkig angreift, die mit ihrem anderen Ende gelenkig mit dem Fahrzeugaufbau 3 verbunden ist. Dies führt zwar zu einer Anlenkstelle mehr am Fahrzeugaufbau oder an einem mit diesem zu verbindenden Querträger, das erfindungsgemäße Prinzip und die damit erreichten Vorteile sind durch die anhand der Fig. 1-4 bereits erläuterte Stützstrebe 12 ebenfalls mit den dabei erreichten Vorteilen realisierbar.

**Patentansprüche**

1. Unabhängige Radaufhängung für Kraftfahrzeuge, insbesondere für angetriebene Hinterräder von Personenkraftwagen, mit einem das Rad (1) lagernden Radträger (2, 2′, 2″, 2‴, 2⁗), der mit dem Fahrzeugaufbau (3) oder dergleichen über drei an diesem angelenkte Lenker verbunden ist, von denen einer ein im wesentlichen in Fahrzeuglängsrichtung verlaufender Längsarm (5, 5′, 5″, 5‴, 5⁗) und die beiden anderen am Radträger über Gelenke angreifende, im wesentlichen übereinander angeordnete sowie zumindest annähernd in Fahrzeugquerrichtung verlaufende Querlenker (6, 7) sind, dadurch gekennzeichnet, daß der Radträger (2, 2′, 2″, 2‴, 2⁗) an dem Längsarm (5, 5′, 5″, 5‴, 5⁗) schwenkbar angeordnet ist und daß einer der Querlenker (6) zwischen seinem radträgerseitigen Gelenk (8) und seinem aufbauseitigem Gelenk (10) gelenkig mit einem Ende einer Stützstrebe (12, 12′, 12″) verbunden ist, die mit ihrem anderen Ende gelenkig an dem Längsarm (5, 5′, 5″, 5‴, 5⁗) angreift.

2. Radaufhängung nach Anspruch 1, dadurch gekennzeichnet, daß der obere Querlenker (6) mit der Stützstrebe (12, 12′, 12″) verbunden ist.

3. Radaufhängung nach Anspruch 2, dadurch gekennzeichnet, daß der Längsarm (5, 5′, 5″, 5‴, 5⁗) am unteren Bereich des Radträgers (2, 2′, 2″, 2‴, 2⁗) schwenkbar an diesem gelagert ist.

4. Radaufhängung nach Anspruch 1, dadurch gekennzeichnet, daß der Längsarm (5, 5′, 5″, 5‴, 5⁗) vom Radträger (2, 2′, 2″, 2‴, 2⁗) nach vorne gerichtet ist.

5. Radaufhängung nach Anspruch 2 und 4, dadurch gekennzeichnet, daß die Stützstrebe (12, 12″) sich vom oberen Querlenker (6) zum Längsarm (5, 5‴) schräg nach vorne unten erstreckt.

6. Radaufhängung nach Anspruch 1, dadurch gekennzeichnet, daß in Verbindung mit einem quer elastischen Lager (17) des Längsarms (5) an diesem ein annähernd quer gerichteter Zusatzlenker (22) angreift, der andererseits am Fahrzeugaufbau (3) oder dgl. angelenkt ist.

7. Radaufhängung nach Anspruch 1, dadurch gekennzeichnet, daß die Stützstrebe (12′) annähernd vertikal verläuft.

8. Radaufhängung nach Anspruch 1, dadurch gekennzeichnet, daß die Schwenkachse (14, 14′), um die der Radträger (2, 2′) gegenüber dem Längsarm (5, 5′) schwenkbar ist, zur Radachse (19) geneigt ist.

9. Radaufhängung nach Anspruch 1, dadurch gekennzeichnet, daß die Schwenkachse (14, 14′) — in Draufsicht — von in Fahrtrichtung hinten innen nach vorne außen verläuft.

10. Radaufhängung nach Anspruch 1, dadurch gekennzeichnet, daß die Schwenkachse (14) durch ein reines Drehgelenk (Lagerzapfen 13) gebildet wird.

11. Radaufhängung nach Anspruch 1, dadurch gekennzeichnet, daß der Radträger (2′) gegenüber dem Längsarm (5′) um zwei im Abstand voneinander angeordnete Kugelgelenke (23, 24) schwenkbar ist.

12. Radaufhängung nach Anspruch 1, dadurch gekennzeichnet, daß die Schwenkachse zwischen Radträger (2″) und Längsarm (5″) durch eine kugelige Anlenkung (25) des Längsarms (5″) am Radträger (2″) und eine an Radträger (2″) und Längsarm (5″) gelenkig angreifende Querstrebe (26) gebildet wird.

13. Radaufhängung nach Anspruch 12, dadurch gekennzeichnet, daß die Gelenkpunkte der Verbindungen Längsarm (5″)/Radträger (2″), Längsarm (5″)/Stützstrebe (12′), Längsarm (5″)/Querstrebe (26) und Längsarm (5″)/Fahrzeugaufbau (3) auf einer Geraden (27) liegen.

14. Radaufhängung nach Anspruch 12, dadurch gekennzeichnet, daß in vertikalem Abstand zu der ersten Querstrebe (26) eine zweite ebenfalls gelenkig an Radträger (2‴) und Längsarm (5‴) angreifende Querstrebe (28) vorgesehen ist.

15. Radaufhängung nach Anspruch 12, dadurch gekennzeichnet, daß die Stützstrebe (12″) mit dem Längsarm (5‴) durch ein ecksteifes Drehgelenk (29) verbunden ist, dessen Drehachse im wesentlichen in Fahrzeugquerrichtung verläuft.

16. Radaufhängung nach Anspruch 1, gekennzeichnet durch eine Spurstange (30), die einerseits mit dem Radträger (2⁗) andererseits mit dem Fahrzeugaufbau (3) oder dgl. gelenkig verbunden ist.

**Claims**

1. An independent wheel suspension for motor vehicles, especially for driven rear wheels of passenger cars, with a wheel carrier (2, 2′, 2″, 2‴, 2⁗) mounting the wheel (1) and connected with the vehicle bodywork (3) or the like through three links articulated thereto, of which one is a longitudinal arm (5, 5′, 5″, 5‴, 5⁗) extending substantially in the longitudinal direction of the vehicle and the other two are transverse links (6, 7), engaging with the wheel carrier through articulations, arranged substantially one above the other and extending at least approximately in the transverse direction of the vehicle, characterised in that the wheel carrier (2, 2′, 2″, 2‴, 2⁗) is pivotably arranged on the longitudinal arm (5, 5′, 5″, 5‴, 5⁗) and that one of the transverse links (6) is articulatedly connected, between its articulation (8) to the wheel carrier and its articulation (10) to the bodywork, to one end of a support strut (12, 12′, 12″) which has its other end articulatedly engaged with the longitudinal arm (5, 5′, 5″, 5‴, 5⁗).

2. A wheel suspension according to Claim 1, characterised in that the upper transverse link (6) is connected to the support strut (12, 12′, 12″).

3. A wheel suspension according to Claim 2, characterised in that the longitudinal arm (5, 5′, 5″, 5‴, 5⁗) is pivotably mounted on the wheel carrier (2, 2′, 2″, 2‴, 2⁗) at the lower region of the latter.

4. A wheel suspension according to Claim 1, characterised in that the longitudinal arm (5, 5′, 5″, 5‴, 5⁗) is directed forwardly from the wheel carrier (2, 2′, 2″, 2‴, 2⁗).

5. A wheel suspension according to claims 2 and 4, characterised in that the support strut (12, 12″) extends obliquely forwards and downwards from the upper transverse link (6) to the longitudinal arm (5, 5‴).

6. A wheel suspension according to Claim 1, characterised in that, in combination with a transverse resilient bearing (17) of the longitudinal arm (5), there acts on the latter an approximately transversely-directed additional link (22) which is articulated for the other part to the vehicle bodywork (3) or the like.

7. A wheel suspension according to Claim 1, characterised in that the support strut (12′) extends approximately vertically.

8. A wheel suspension according to Claim 1, characterised in that the pivot axis (14, 14′) about which the wheel carrier (2, 2′) is pivotable in relation to the longitudinal arm (5, 5′) is inclined with respect to the wheel axis (19).

9. A wheel suspension according to Claim 1, characterised in that the pivot axis (14, 14′) — in plan view — extends in the driving direction from inwards to the rear to forwards and outwards.

10. A wheel suspension according to Claim 1, characterised in that the pivot axis (14) is formed by a pure swivel joint (bearing journal 13).

11. A wheel suspension according to Claim 1, characterised in that the wheel carrier (2′) is pivotable in relation to the longitudinal arm (5′) about two spaced-apart ball joints (23, 24).

12. A wheel suspension according to Claim 1, characterised in that the pivot axis between the wheel carrier (2″) and the longitudinal arm (5″) is formed by a ball-type articulation (25) of the longitudinal arm (5″) on the wheel carrier (2″) and a transverse strut (26) articulatedly engaging with the wheel carrier (2″) and the longitudinal arm (5″).

13. A wheel suspension according to Claim 12, characterised in that the points of articulation of the respective connections between the longitudinal arm (5″) and the wheel carrier (2″), between the longitudinal arm (5″) and the support strut (12′), between the longitudinal arm (5″) and the transverse strut (26) and between the longitudinal arm (5″) and the vehicle bodywork (3) lie on one straight line (27).

14. A wheel suspension according to Claim 12, characterised in that, at a vertical distance from the first transverse strut (26), a second transverse strut (28) is provided which likewise articulatedly engages with the wheel carrier (2‴) and the longitudinal arm (5‴).

15. A wheel suspension according to Claim 12, characterised in that the support strut (12″) is connected to the longitudinal arm (5‴) by a swivel joint (29) of fixed angle, the axis of rotation of which extends substantially in the transverse direction of the vehicle.

16. A wheel suspension according to Claim 1, characterised by a track rod (30) which is articulatedly connected for the one part with the wheel carrier (2⁗) and the other part with the vehicle bodywork (3) or the like.

## Revendications

1. Suspension de roue indépendante pour véhicules automobiles, notamment pour des roues arrières entraînées de voitures particulières, avec un support de roue (2, 2′, 2″, 2‴, 2⁗) supportant la roue (1) et qui est relié à la carrosserie (3) du véhicule ou bien une partie analogue, par l'intermédiaire de trois bras oscillants articulés sur celle-ci, dont l'un est un bras longitudinal (5, 5′, 5″, 5‴, 5⁗) s'étendant essentiellement en direction longitudinale du véhicule, tandis que les deux autres sont des bras transversaux (6, 7) venant en prise sur le support de roue par l'intermédiaire d'articulations, disposés essentiellement l'un au-dessus de l'autre, et s'étendant tout au moins approximativement en direction transversale du véhicule, suspension caractérisée en ce que le support de roue (2, 2′, 2″, 2‴, 2⁗) est disposé de façon à pouvoir pivoter sur le bras longitudinal (5, 5′, 5″, 5‴, 5⁗) et qu'un des bras oscillants transversaux (6), entre son articulation (8) côté support de roue et son articulation (10) côté carrosserie, est relié par articulation à une extrémité d'une jambe de force de soutien (12, 12′, 12″) qui, par son autre extrémité, vient en prise de façon articulée sur le bras longitudinal (5, 5′, 5″, 5‴, 5⁗).

2. Suspension selon la revendication 1, caractérisée en ce que le bras oscillant transversal supérieur (6) est relié à la jambe de force de soutien (12, 12′, 12″).

3. Suspension selon la revendication 2, caractérisée en ce que le bras longitudinal (5, 5′, 5″, 5‴, 5⁗) est monté de façon à pouvoir pivoter sur le support de roue (2, 2', 2", 2"', 2"") à la partie inférieure de celui-ci.

4. Suspension selon la revendication 1, caractérisée en ce que le bras longitudinal (5, 5', 5", 5"', 5"") est orienté vers l'avant à partir du support de roue (2, 2', 2", 2"', 2"").

5. Suspension selon les revendications 2 et 4, caractérisée en ce que la jambe de force de soutien (12, 12') s'étend obliquement vers l'avant et vers le bas depuis le bras oscillant transversal (6) vers le bras longitudinal (5, 5"').

6. Suspension selon la revendication 1, caractérisée en ce que, en combinaison avec un palier (17) élastique transversalement, du bras longitudinal (5), un bras oscillant supplémentaire (22) orienté approximativement transversalement, vient en prise sur ce bras longitudinal, et est par ailleurs, articulé sur la carrosserie (3) du véhicule, ou bien une partie analogue.

7. Suspension selon la revendication 1, caractérisée en ce que la jambe de force de soutien (12') est approximativement verticale.

8. Suspension selon la revendication 1, caractérisée en ce que l'axe de pivotement (14, 14'), autour duquel peut pivoter par rapport au bras longitudinal (5, 5') le support de roue (2, 2') est incliné par rapport à l'axe (19) de la roue.

9. Suspension selon la revendication 1, caractérisée en ce que l'axe de pivotement (14, 14'), vu de dessus, s'étend selon la direction de déplacement du véhicule de l'arrière à l'intérieur vers l'avant à l'extérieur.

10. Suspension selon la revendication 1, caractérisée en ce que l'axe de pivotement (14) est constitué par une pure articulation de rotation (tourillon de paliers 13).

11. Suspension selon la revendication 1, caractérisée en ce que le support de roue (2') est susceptible de pivoter par rapport au bras longitudinal (5') autour de deux articulations à rotules (23, 24) disposées à une certaine distance l'une de l'autre.

12. Suspension selon la revendication 1, caractérisée en ce que l'axe de pivotement entre le support de roue (2") et le bras longitudinal (5") est constitué par une articulation à rotule (25) du bras longitudinal (5") sur le support de roue (2") et une jambe de force transversale (26) venant en prise sur le support de roue (2") et le bras longitudinal (5").

13. Suspension selon la revendication 12, caractérisée en ce que les points d'articulation des liaisons bras longitudinal (5")/support de roue (2"), bras longitudinal (5")/jambe de force de soutien (12'), bras longitudinal (5")/jambe de force transversale (26), et bras longitudinal (5")/carrosserie (3) du véhicule, se situent sur une droite (27).

14. Suspension selon la revendication 12, caractérisée en ce qu'à distance verticale de la première jambe de force transversale (26), il est prévu une seconde jambe de force transversale (28) venant en prise également par articulation sur le support de roue (2"') et le bras longitudinal (5"').

15. Suspension selon la revendication 12, caractérisée en ce que la jambe de force de soutien (12") et le bras longitudinal (5"") sont reliés par une articulation en rotation en équerre rigide (29) dont l'axe de rotation s'étend essentiellement en direction transversale du véhicule.

16. Suspension selon la revendication 1, caractérisée par une barre d'accouplement (30) qui est reliée, d'une part, au support de roue (2"") et, d'autre part, à la carrosserie (3) du véhicule ou une autre partie analogue.

Fig.2

Fig.4

Fig.1

Fig.3

Fig.5

Fig.6

Fig.7

Fig.8

Fig.9

Fig.10

_Fig.11_

_Fig.12_

_Fig.13_

_Fig.14_

Fig.15

Fig.16